Europäisches Patentamt

European Patent Office

Office européen des brevets

(19)

(11) EP 0 955 538 A1

(12) **EUROPÄISCHE PATENTANMELDUNG**

(43) Veröffentlichungstag:
10.11.1999  Patentblatt 1999/45

(51) Int Cl.[6]: **G01N 21/89**, G06T 7/00

(21) Anmeldenummer: 99890133.4

(22) Anmeldetag: 22.04.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **05.05.1998  AT  74398**

(71) Anmelder: **ÖSTERREICHISCHES FORSCHUNGSZENTRUM SEIBERSDORF GES.M.B.H.**
**2444 Seibersdorf (AT)**

(72) Erfinder:
• **Mayer, Konrad Dipl. Ing.**
  **1230 Wien (AT)**
• **Krattenthaler, Werner Dr.**
  **2346 Maria Enzersdorf (AT)**
• **Dünnebeil, Gerhard**
  **1120 Wien (AT)**
• **Vrabl, Andreas Dipl. Ing.**
  **1100 Wien (AT)**

(74) Vertreter: **Wildhack, Helmut, Dr. Dipl.-Ing.**
**Dipl.-Ing. Dr. Wildhack**
**Landstrasser Hauptstrasse 50**
**1030 Wien (AT)**

(54) **Verfahren und Einrichtung zur Feststellung und/oder Visualisierung von Fehlern auf der Oberfläche von Gegenständen**

(57)     Die Erfindung betrifft ein Verfahren und eine Einrichtung zur Feststellung von Fehlern auf der Oberfläche von Gegenständen, wobei zur Aufnahme von Gegenstandszeilen (Z) des Gegenstandes (1) zumindest eine Zeilen-Kamera (2, 2') vorgesehen ist und die Bildsignale des(r) Zeilensensors(en) (5) einer Auswerteeinheit (30) zugeführt sind. Erfindungsgemäß ist vorgesehen, daß die Zeilen-Kamera(s) (2, 2') zur zumindest zweifachen Aufnahme einer Gegenstandszeile (Z) eingerichtet ist (sind), wobei jede Gegenstandszeile (Z) für jede der einzelnen Aufnahmen unter einer unterschiedlichen Beleuchtungsrichtung (13, 13') mit zumindest einer Beleuchtungseinrichtung (4, 4') beleuchtet ist und daß die Auswerteeinheit (30) eine Verknüpfungseinheit (6) umfaßt, in der die bei den jeweiligen Beleuchtungsrichtungen (13, 13') sich ergebenden Helligkeitswerte der einzelnen Gegenstandspunkte(n) (P) dieser Gegenstandszeile (Z) nach einer vorgegebenen Formel zu einem Term verknüpft werden, welcher Term zur Auswertung gespeichert und/oder bereitgestellt wird.

Fig. 2

EP 0 955 538 A1

## Beschreibung

Die Erfindung betrifft ein Verfahren gemäß dem Oberbegriff des Patentanspruches 1 sowie eine Einrichtung gemäß dem Oberbegriff des Patentanspruches 15.

Die Feststellung von Oberflächenfehlern ist in der Praxis mitunter schwierig bzw. können Fehler nicht immer mit der gewünschten Genauigkeit festgestellt werden.

Die Überprüfung von Gegenständen auf Oberflächenfehler kann in vielfältiger Weise vorgenommen werden; bekannte Prüfmethoden sind z.B. Lasertriangulation Glanzwinkelfeststellungen usw. Weitere Verfahren und Einrichtungen sind beispielsweise aus der EP 543 629 A1 und der US 5 040 057 A bekannt geworden. Die vorliegende Erfindung betrifft eine Methode der Fehlerfeststellung, bei der die Gegenstände mit einer Videokamera abgetastet bzw. Bilder der Gegenstände aufgenommen werden und vorteilhafterweise auf einem Bildschirm dargestellt werden können. Die aufgenommenen Bilder können rechnerisch ausgewertet und/oder visuell überprüft werden. Ein Verfahren und eine Einrichtung der eingangs genannten Art sind aus der AT 402 861 B bekannt geworden. Bei der Untersuchung von komplexen Oberflächenfehlern zeigt diese bekannte Vorgangsweise jedoch Nachteile hinsichtlich der genauen Feststellbarkeit von Fehlern und der Einfachheit der Auswertung.

Insbesondere bei der Produktion von Schienen treten Qualitätsfehler auf, die die Funktionsfähigkeit oder Festigkeit beeinflussen können. Viele dieser Fehler sind an der Oberfläche z.B. durch charakteristische Ausprägungen von Unebenheiten, Rissen, Riefen usw. sichtbar. Eine Problematik bei der Fehlererkennung ist es, daß die Schienenoberfläche viele unterschiedliche Erscheinungsformen haben kann, welche Erscheinungsformen nicht unbedingt Fehler sein müssen. Z.B. können glänzende Stellen Zunderstellen, Fettschmierer od.dgl. auftreten, die zwar optisch das Oberflächenbild der Schiene verändern, aber nicht als Fehler zu werten sind. Demgegenüber sind Überwalzungsfehler nur durch einen sehr kleinen, nicht gut erkennbaren, charakteristischen Riß festzustellen. Ähnlich verhält es sich bei der Überprüfung einer Vielzahl von insbesondere metallischen Gegenständen, die z.B. durch Walzen, Ziehen od.dgl., hergestellt sind. Auch Gegenstände, die auf verschiedene Weise aus Kunststoffen hergestellt sind, weisen Oberflächenfehler auf, die mitunter überprüft werden müssen.

Die Erfindung setzt sich nunmehr das Ziel, ein Feststellungsverfahren für Fehler zu erstellen, das eine Reihe von üblicherweise auftretenden Oberflächenfehlern gut erkennen läßt.

Erfindungsgemäß ist ein Verfahren der eingangs genannten Art durch die im Kennzeichen des Anspruches 1 angeführten Merkmale charakterisiert.

Eine Einrichtung der eingangs genannten Art ist erfindungsgemäß durch die im Kennzeichen des Anspruches 15 angeführten Merkmale charakterisiert.

Der Erfindung liegt folgendes Prinzip zugrunde: Mit einer Zeilenkamera wird der Gegenstand abgetastet; dabei wird gleichzeitig eine Reihe bzw. Anzahl von Gegenstandspunkten aufgenommen, welche nebeneinander auf dem Gegenstand gelegen sind und eine Gegenstandszeile bilden. Die einzelnen Gegenstandspunkte werden auf entsprechende Sensorpunkte des Zeilensensors der Zeilenkamera abgebildet. Es werden von jeder Gegenstandszeile zumindest zwei Aufnahmen mit der Zeilenkamera getätigt, wobei bei jeder Aufnahme die Gegenstandszeile mit Licht, das unter einer anderen Beleuchtunsrichtung einfällt, beleuchtet wird. Die sich bei den unterschiedlichen Beleuchtungsrichtungen ergebenden Helligkeitswerte der einzelnen Gegenstandspunkte werden vom Zeilensensor aufgezeichnet und in einer Verknüpfungseinheit in ein bestimmtes Verhältnis gebracht. Soferne die betrachteten Gegenstandspunkte eine vergleichbare Oberflächenausrichtung bzw. Neigung besitzen, sind die für sie ermittelten Verhältnisse ähnlich bzw. vergleichbar, weil die aufgenommenen Helligkeitswerte eines Gegenstandspunktes vor allem von der Einfallsrichtung des beleuchtenden Lichtes abhängen.

Ist ein Oberflächenfehler vorhanden, äußert sich dieser in einer Neigung der Fläche dieses Gegenstandspunktes, die von der Ausrichtung der fehlerfreien Oberfläche des Gegenstandes bzw. der Neigung von als ordnungsgemäß empfundenen Gegenstandspunkten bzw. -bereichen abweicht; die Reflexion des Lichtes von Fehlern erfolgt somit anders als von ordnungsgemäß orientierten Gegenstandspunkten; es kann eine veränderte Reflexion oder sogar eine Abschattung erfolgen, womit das Verhältnis der unter Licht aus unterschiedlichen Beleuchtungsrichtungen ermittelten Helligkeiten dieses Gegenstandspunktes gegenüber ordnungsgemäßen Gegenstandspunkten verändert ist. Der Grad der Veränderung kann durch Vergleiche mit vorgegebenen Verhältniswerten ermittelt werden.

Der durch die Kamera ermittelte Helligkeitswert eines beleuchteten Gegenstandspunktes hängt von der Neigung der beleuchteten Fläche zur Beleuchtungsrichtung und weiters auch von anderen Einflußgrößen ab, z.B. Lichtstärke, Empfindlichkeit des Kamerasensors, dem Reflexionsvermögen des Gegenstandes, der Gegenstandsfarbe usw.. Die Grundidee ist, mit mindestens zwei Gegenstandsbildaufnahmen unter unterschiedlicher Beleuchtungsrichtung zu arbeiten, da man solcherart alle anderen Einflußgrößen konstant halten kann und somit nur der Einfluß der relativen Oberflächenneigung zur Beleuchtungsrichtung als gewünschte Größe für die Fehlererkennung übrig bleibt. Erfindungsgemäß werden Terme, d.h. Funktionen bzw. Verhältnisse der Helligkeiten ausgewertet. Diese ermittelten Verknüpfungsterme der Helligkeiten können an sich auch bekannte Kalibrierfunktionen sowohl der Helligkeitswerte als auch der Bildgeometrie berücksichtigen.

Ferner ist es zweckmäßig, nicht nur einen punktweisen Vergleich anzustellen und daraus eine Fehleraussage abzuleiten, sondern auch Flächenbereiche zu untersuchen. Dies kann dadurch erfolgen, daß die Abweichung der Verhältnisse der bei unterschiedlichen Beleuchtungsrichtungen aufgenommenen Helligkeiten von Punkten über den Flächenbereich gemittelt wird (z.B. durch eine Gauß-gewichtete Mittelwertbildung); es können aber auch bekannte statistische Verfahren zum Vergleich der Helligkeiten oder Terme der Punkte eines Flächenstücks herangezogen werden, indem beispielsweise die Grauwertverteilungen von Flächenstücken verglichen werden oder klassische Verfahren zur Fehlerklassifizierung eingesetzt werden, die auf Berechnung der Kovarianz beruhen.

Die Verhältnisse der Helligkeiten für die einzelnen Gegenstandspunkte können in Grauwerte von Bildschirmpunkten eines Bildschirmes umgesetzt werden, wobei diese Grauwerte weitgehend unabhängig von der Helligkeit des Gegenstandspunktes an sich sind. Diese Grauwerte geben vielmehr eine Information über die Ausrichtung der Oberflächen der einzelnen Gegenstandspunkte.

Eine Visualisierung der Fehler ist zwar ein vorrangiges Ziel der Erfindung, jedoch können die erhaltenen Daten auch der rechnerischen Weiterverarbeitung für Aufgaben der Statistik, der Qualitätskontrolle und Qualitätsdokumentation, der Archivierung usw. dienen. Auch die automatische Fehlererkennung, die eine visuelle Untersuchung bzw. den geschulten Prüfer ganz oder teilweise ersetzen kann, ist möglich, indem man die Überschreitung von Toleranzgrenzen von rechnerisch ermittelten und eventuell flächenstückweise gemittelten Werte bzw. Vergleichstermen als Fehlerindikator nicht visuell sondern per Rechner auswertet.

Es kann somit eine Auswertung der Verhältnisse der Helligkeiten bzw. der Grauwerte visuell oder durch optische Bildverarbeitungsmittel und/oder rechnerisch vorgenommen werden; insbesondere können Toleranzwerte für die Helligkeitsverhältnisse oder die davon abgeleiteten Grauwerte vorgesehen werden. Bei Überschreiten derartiger Toleranzwerte kann eine entsprechende Anzeige, z.B. am Bildschirm, selbst erfolgen. Ein Vorteil der erfindungsgemäßen Anordnung liegt darin, daß die Gegenstände abgebildet werden können, ohne daß die Überprüfung online erfolgen muß, da die aufgenommenen Bilddaten zwischengespeichert und zu einem späteren Zeitpunkt zur Überprüfung oder rechnerischen Auswertung wiedergegeben werden können.

Eine Vorgangsweise nach Anspruch 6 ist vorteilhaft, da damit eine einfache Beleuchtungs- und Abbildungsgeometrie gegeben ist und gleichzeitig eine eindeutige Zuordnung der in einer Gegenstandszeile angeordneten Gegenstandspunkte zu den Bildschirmpunkten in einer Bildschirmzeile erreicht wird.

Vorteilhaft sind die Merkmale des Anspruches 8, da Gegenstände nicht nur von einer Seite bzw. bezüglich einer Fläche aufgenommen werden können, sondern auch hinterschnittene Gegenstände bzw. Gegenstände über ihren Umfang aufgenommen dargestellt und überprüft werden können. Die mit den einzelnen Kameras aufgenommene Gegenstandszeilen werden durch entsprechende elektronische Verarbeitung der erhaltenen Verhältniswerte nebeneinander als Bildpunkte einer Bildzeile und in Abtastrichtung aufeinanderfolgende Gegenstandszeilen werden über die Höhe des Bildschirmes als Streifen abgebildet, wobei die einzelnen nebeneinander abgebildeten Streifen gemeinsam einen Teil- oder Vollmantel des Gegenstandes wiedergeben.

Ein vorteilhafter Term für Helligkeitswerte errechnet sich gemäß Anspruch 8. Der Zähler des Bruches wertet Helligkeitsunterschiede aus; keine Helligkeitsunterschiede bedeuten, daß keine Abhängigkeit der Helligkeiten von der Beleuchtungsrichtung besteht; betragsmäßig große Werte bedeuten starke Abhängigkeit. Der Nenner gewichtet die Differenz mit der Gesamthelligkeit, wobei der Summand 1 eine Division durch 0 vermeidet. Dabei werden kleine Helligkeitsdifferenzen in dunklen Gebieten ähnlich gewichtet wie große Helligkeitsdifferenzen in hellen Bereichen. Das erfindungsgemäße Verfahren ermöglicht somit einen weitgehend helligkeitsunabhängigen Bildkontrast.

Um auf einem Bildschirm eine übliche Grauwertdarstellung oder eine einfärbige Darstellung zu erreichen, können die Werte der Verhältnisse umskaliert werden, sodaß ein Wert 0 als mittlerer Grau(Farb)wert erscheint. Große Kontraste können je nach Vorzeichen hell oder dunkel abgebildet werden. Bei idealen Verhältnissen, d.h. bei einem Verhältnis von Helligkeiten, das über die gesamte Oberfläche des Gegenstandes gleich ist, würde ein eintönig graues Bild am Bildschirm festgestellt werden können, Fehler zeigen sich durch Abweichungen der Helligkeitsverhältnisse von diesem Grundwert.

Soferne TDI-Kameras eingesetzt werden, die eine Vielzahl von parallelen Sensorzeilen aufweisen, werden die Bildsignale der einzelnen Sensorpunkte der einzelnen Zeilensensoren summiert, sodaß auch bei nicht optimalen Lichtverhältnissen auswertbare Helligkeiten von den Gegenstandspunkten bei den unterschiedlichen Beleuchtungsrichtungen erhalten werden. Da bei TDI-Kameras eine Aufnahme derselben Gegenstandszeile fortschreitend mit jeweils einem anderen Zeilensensor vorgenommen wird, ist es erforderlich, die Abtastgeschwindigkeit bzw. den Abtasttakt der TDI-Kamera und die Relativbewegung zwischen Kamera und Gegenstand zu synchronisieren, sodaß aufeinanderfolgende Gegenstandszeilen zu entsprechenden Zeiten von den jeweiligen Zeilensensoren aufgenommen werden können.

Von Bedeutung ist auch die Beleuchtungsrichtung, unter der die aufgenommenen Gegenstandszeilen beleuchtet werden. Die Beleuchtung der Gegenstandszeile erfolgt bei einer normal zur Oberfläche des Gegenstandes ausgerichteten optischen Achse der Kamera, vorteilhafterweise mit einer in einer Normalebene zur Gegenstandszeile liegenden Beleuchtungsrichtung, die insbesondere unter einem Winkel von 20° bis 60° zur Oberfläche des Gegenstandes geneigt ist. Vorteilhafterweise wird die Gegenstandszeile von in bezug auf die aufnehmende Kamera entgegengesetzten Seiten beleuchtet. Prinzipiell ist es auch möglich, daß die Beleuchtungseinrichtungen auf nur einer Seite der Kamera angeordnet sind und eine Beleuchtungseinrichtung die Gegenstandszeile z.B. unter einem Höhenwinkel von 25° beleuchtet und die andere Beleuchtungseinrichtung die Gegenstandszeile unter einem anderen Winkel von z.B. 55° beleuchtet.

Wenn die Oberfläche des Gegenstandes nicht diffus sondern stark gebündelt reflektiert, was bei blanken, metallischen Oberflächen vorkommen kann, könnte das reflektierte Licht in die zur Beleuchtungsrichtung entgegengesetzte Richtung gelenkt werden und kein Lichtanteil in die Kamera einfallen. In diesem Fall ist bei zwei Aufnahmen mit unterschiedlicher Beleuchtungsrichtung die reflektierende Stelle als schwarzer Fleck zu sehen. Ein geringer Fehler ist in diesem Bereich der Oberfläche nicht mehr zu erkennen, da der Gegenstandspunkt auch bei einer kleinen Neigungsabweichung schwarz abgebildet wird. Bei einer stärkeren Abweichung kann dann der Effekt auftreten, daß das Licht bei Beleuchtung von der einen Seite voll in die Kamera reflektiert wird, während bei Beleuchtung von der anderen Seite der Gegenstandspunkt noch immer schwarz abgebildet wird.

Die Aufnahme von stark gebündelt reflektierenden Flächenbereichen kann erfindungsgemäß derart erfolgen, daß die Beleuchtungsrichtung nicht scharf gebündeltes Licht, sondern diffuses Licht einstrahlt. Diffuse Beleuchtung heißt, daß das Licht auf den Gegenstandpunkt nicht aus nur einem sehr begrenzten Raumwinkel, sondern aus einem bestimmten Winkelabschnitt verteilt einfällt. Durch eine Anordnung mehrerer Lampen, durch Streuglasscheiben oder Reflektorschirme kann die Beleuchtung mehr oder weniger diffus gestaltet werden. Ein besonderer Vorteil ist es, wenn der diffuse Beleuchtungswinkelbereich durch verstellbare Blenden oder Zu- bzw. Abschaltung von Lichtquellen innerhalb einer Beleuchtungseinheit im Betrieb geändert werden kann, je nachdem, welche Oberflächenausprägungen des Gegenstandes als Fehler erkannt werden sollen.

Es ist möglich, Vergleichsterme gemäß der Vorgangsweise gemäß Anspruch 14 zu ermitteln, z.B. durch Mittelung von Helligkeitsverhältnissen einer Anzahl von Gegenstandspunkten, die aufeinanderfolgend abgetastet werden. Soferne dabei eine Anzahl von sich nicht sonderlich stark verändernden Verhältniswerten bzw. Termen erhalten wurde, kann angenommen werden, daß diese Helligkeitsverhältnisse bzw. Terme einer fehlenfreien Oberfläche entsprechen und können somit für insbesondere nachfolgend ermittelte Verhältnisse als Vergleichsterme herangezogen werden. Bei Feststellung von diesen Vergleichstermen gegenüber ein gewisses Toleranzmaß überschreitenden Termen können diese Terme als von Fehlern stammend gewertet und allenfalls auf der Bildschirmdarstellung der Oberfläche des Gegenstandes markiert werden.

Die Vorgangsweise gemäß Anspruch 11 ist vorteilhaft. Das hochauflösende Bild dient zur genauen Analyse der Oberflächenstruktur, um unebene Stellen noch weiter in gewollte oder fehlerhafte Unebenheiten unterteilen zu können. Beispielsweise kann eine eingestanzte Produktionsnummer eine gewollte Unebenheit sein, deren Struktur aber hochauflösend abgebildet werden soll. Bei einer Beleuchtung aus verschiedenen Richtungen (z.B. Richtungen, die zueinander um 120° versetzt sind) mit rotem, grünem und blauem Licht, geben der Buntton und die Farbsättigung des Farbbildes Hinweise auf die Ausrichtung bzw. Neigung eines Gegenstandsbereiches. Bei geeigneter Gewichtung der Helligkeitswerte ergibt eine ordnungsgemäße Ausrichtung der Oberfläche ein Mischlicht aus den drei Farbkomponenten, das der neutralen Grauskala entspricht. Bei einer Neigung des Oberflächenbereiches hin zur Einfallsrichtung des roten, grünen oder blauen Lichtes verändern sich Buntton und Sättigung gemäß dem Neigungswinkel. Gleichzeitig kann es von Vorteil sein, die Informationen über Flächenneigung bzw. Flächenunebenheiten nur mit geringerer Auflösung zu erhalten, als das Intensitätsbild, das zur Strukturerkennung (z.B. von eingestanzten Schriftzeichen) dienen kann.

Bevorzugte Ausführungsbeispiele des erfindungsgemäßen Verfahrens und der erfindungsgemäßen Einrichtung sind der folgenden Beschreibung, den Patentansprüchen und der Zeichnung zu entnehmen.

Im folgenden wird die Erfindung anhand der Zeichnung beispielsweise näher erläutert: Es zeigen Fig. 1 ein Prinzipschema einer erfindungsgemäßen Einrichtung, Fig. 2, 3, 4, 5 und 6 verschiedene Anordnungen von Kameras und Beleuchtungseinrichtungen und Fig. 7 eine Prinzipdarstellung für die Aufnahme einer Gegenstandszeile.

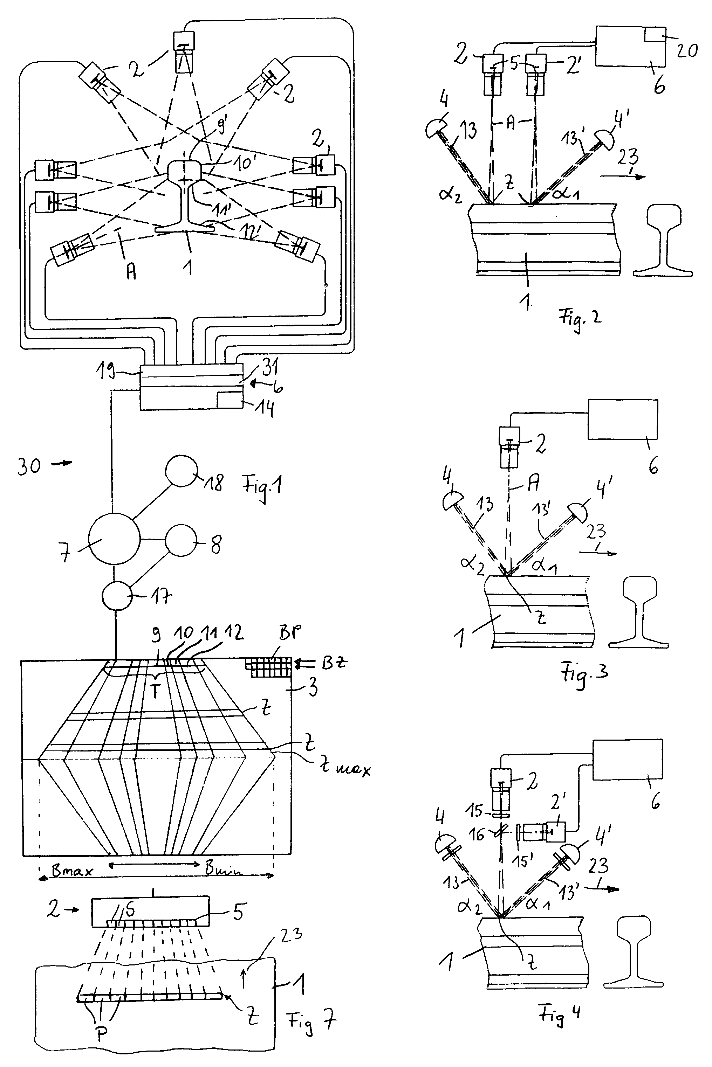

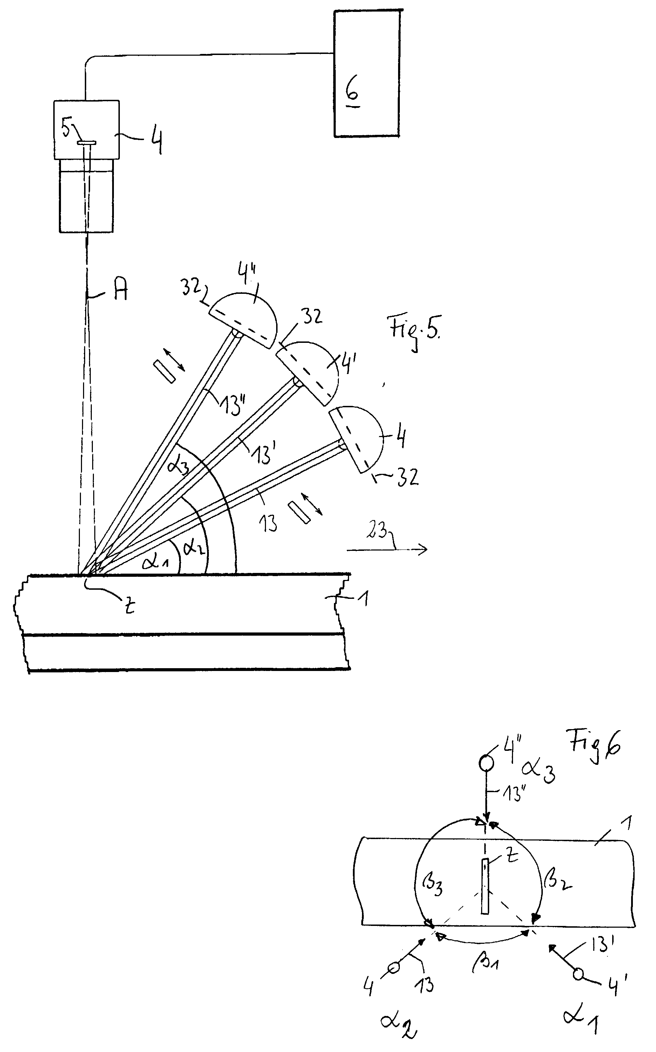

Fig. 1 zeigt eine schematische Einrichtung zur Visualisierung von Fehlern. Als zu untersuchender Gegenstand ist eine Schiene 1 dargestellt, die einen Schienenkopf, einen Mittelteil und einen Schienenfuß aufweist, wobei einzelne Flächenbereiche der Schiene mit 9', 10', 11' und 12' bezeichnet sind. Die Schiene 1 wird von einer Mehrzahl von Kameras 2 umgeben, wobei sich die Aufnahmebereiche der einzelnen Kameras überlappen können.

Es erfolgt eine Relativbewegung zwischen dem Gegenstand 1 und den Kameras 2. Vorteilhafterweise liegt die optische Achse der Kameras 2 in einer Normalebene zur Relativbewegung, wobei die Richtung der Relativbewegung der Abtastrichtung 23 der Kameras entspricht.

Prinzipiell könnte der Zeilensensor 5 der Kameras 2 (Fig. 7) unter einem Winkel zur Abtastrichtung 23 geneigt in Abtastrichtung 23 relativ zum Gegenstand geführt werden; vorteilhafterweise erstreckt sich der Zeilensensor 5 in einer Normalebene zur Abtastrichtung 23, sodaß Gegenstandszeilen Z von den Sensorzeilen 5 aufgenommen werden, die im wesentlichen senkrecht zur Abtastrichtung 23 ausgerichtet sind.

Fig. 7 zeigt schematisch eine oberhalb eines Gegenstandes 1 angeordnete Zeilenkamera 2, die einen senkrecht zur Abtastrichtung 23 verlaufenden Zeilensensor 5 aufweist, der eine Gegenstandszeile Z aufnimmt, die demzufolge ebenfalls senkrecht zur Abtastrichtung 23 verläuft. Die senkrechte Ausrichtung des Zeilensensors 5 zur Abtastrichtung ist nicht zwingend erforderlich, erleichtert aber die Auswertung. Die Gegenstandspunkte P der Gegenstandszeile Z werden auf die einzelnen Sensorpunkte S des Zeilensensors 5 abgebildet. Mit den Sensorpunkten S des Zeilensensors 5 werden die Helligkeiten der Gegenstandspunkte P gemessen. Nachdem zumindest zwei Bilder einer Gegenstandszeile Z unter unterschiedlicher Beleuchtungsrichtung 13,13' (Fig. 2 bis 5) aufgenommen wurden, wird eine an die aufgenommene Gegenstandszeile Z in Abtastrichtung 23 folgende Gegenstandszeile Z mehrfach aufgenommen bzw. die Helligkeiten der Gegenstandspunkte P dieser folgenden Gegenstandszeile Z mit Licht aus unterschiedlichen Beleuchtungsrichtungen ermittelt usw.. Die Beleuchtungsrichtungen bleiben während der Untersuchung eines Gegenstandes zumeist gleich. Wenn es eine unterschiedliche Oberflächenbeschaffenheit erfordert, wird die Beleuchtungsrichtung abgeändert.

Fig. 2 zeigt eine mögliche Vorgangsweise zur Aufnahme einer Gegenstandszeile Z mit zwei Zeilenkameras 2, 2', deren optische Achse A senkrecht zur Oberfläche des Gegenstandes 1 ausgerichtet ist. Die Zeilensensoren 5 der beiden Kameras 2, 2' verlaufen senkrecht zur Bildebene. Es sind zwei Beleuchtungseinrichtungen 4, 4' dargestellt, von denen die Beleuchtungseinrichtung 4 der Kamera 2 und die Beleuchtungseinrichtung 4' der Kamera 2' zugeordnet ist. Nachdem die Gegenstandszeile Z mit der Kamera 2 aufgenommen und während dieser Aufnahme mit Licht der Beleuchtungseinrichtung 4 mit einer Beleuchtungsrichtung 13 beleuchtet wurde, deren Höhenwinkel $\alpha_2$ beträgt, erfolgt eine weitere Aufnahme derselben Gegenstandszeile Z, nachdem sich diese Gegenstandszeile Z vor die Kamera 2' weiterbewegt hat. Diese weitere Aufnahme derselben Gegenstandszeile Z erfolgt bei einer Beleuchtungsrichtung 13' der Beleuchtungseinrichtung 4' mit dem Höhenwinkel $\alpha_1$.

Somit wird von der Kamera 2 ein Bild der Gegenstandszeile Z unter dem Höhenwinkel $\alpha_2$ und von der Kamera 2' ein Bild der Gegenstandszeile Z unter einem Höhenwinkel $\alpha_1$ aufgenommen. Die Helligkeitswerte, die von einander entsprechenden Sensorpunkten 5 der Kamera 2 bzw. der Kamera 2' aufgenommen wurden, werden einer Verknüpfungseinheit 6 zugeführt, in der unter Verwendung einer in einem Formelspeicher 20 gespeicherten Formel ein Verhältniswert bzw. Term der Helligkeiten, die unter verschiedenen Beleuchtungsrichtungen 13,13' aufgenommen wurden, ermittelt wird.

Diese Terme und/oder die Helligkeitswerte können in einem Zwischenspeicher 19 für eine weitere Verwendung zwischengespeichert werden.

Die Beleuchtungsrichtung 13,13' wird nicht nur durch die Höhenwinkel a bestimmt, sondern auch durch den Azimutwinkel $\beta_1$, $\beta_2$, $\beta_3$, welche die Winkel zwischen den Beleuchtungsrichtungen 13,13' bei ihrer Projektion in eine die Gegenstandszeile enthaltenden Normalebene zur optischen Achse A der Kamera 2,2' darstellen (Fig.7).

In Fig. 3 ist eine einzige Kamera 2 zur Aufnahme der Gegenstandszeile Z unter zwei unterschiedlichen Beleuchtungsrichtungen 13,13' dargestellt. Zuerst wird mit der Kamera 2 eine Aufnahme getätigt, bei der die Gegenstandszeile Z mit der Beleuchtungseinrichtung 4 unter der Beleuchtungsrichtung 13 bzw. dem Höhenwinkel $\alpha_2$ beleuchtet ist; nach Durchführung dieser Aufnahme wird eine weitere Aufnahme getätigt, während der die Gegenstandszeile Z mit der Beleuchtungseinrichtung 4' unter dem Höhenwinkel $\alpha_1$ beleuchtet ist. Diese Aufnahmen erfolgen relativ rasch hintereinander, bedingt durch die Relativbewegung zwischen dem Gegenstand 1 und der Kamera 2. Aus diesem Grund werden zweckmäßig als Beleuchtungseinrichtungen 4, 4' Blitzlicht-Beleuchtungseinrichtungen vorgesehen.

Bei der Anordnung gemäß Fig. 2 werden entsprechende lichtstarke Beleuchtungseinrichtungen 4, 4' eingesetzt, wobei Sorge dafür getragen ist, daß die hintereinander aufgenommenen Gegenstandszeilen Z nicht gleichzeitig durch beide Beleuchtungseinrichtungen 4, 4' beleuchtet werden, was durch entsprechendes Ein- und Ausschalten oder durch Aufbau von Lichtschirmen vermieden werden kann.

In Fig. 4 ist eine Anordnung dargestellt, bei der die zumindest zwei vorgesehenen Kameras 2, 2' gleichzeitig die Gegenstandszeile Z aufnehmen, wobei die zumindest zwei Beleuchtungseinrichtungen 4, 4' ebenfalls gleichzeitig die Gegenstandszeile Z beleuchten. Die einzelnen Beleuchtungseinrichtungen 4, 4' strahlen Licht unterschiedlicher Wellenlänge ab, wobei die Beleuchtungsrichtungen 13,13' der unterschiedlichen Lichtarten unterschiedlich sind. Vor die Kameras 2, 2' sind entsprechende Farbfilter 15,15' gesetzt; die Lichtaufteilung erfolgt mit einem teildurchlässigen Spiegel 16. Auf diese Weise erhält die Kamera 2 z.B. Licht nur von der Beleuchtungseinrichtung 4, die unter der Beleuchtungsrichtung 13 einstrahlt und die Kamera 2' aufgrund des entsprechenden Farbfilters 15' nur Licht aus der Beleuchtungseinrichtung 4', die unter der Beleuchtungsrichtung 13' einstrahlt. Die Anordnung gem. Fig. 4 hat den Vorteil, daß mit jeder der Kameras 2, 2' dieselbe Gegenstandszeile Z gleichzeitig bei einer gleichzeitigen Lichtbeaufschlagung unter unterschiedlichen Beleuchtungsrichtungen 13,13' aufgenommen werden kann.

Prinzipiell ist es durchaus möglich und zweckmäßig, von einer Gegenstandszeile Z Aufnahmen jeweils unter Beleuchtung aus mehr als zwei unterschiedlichen Beleuchtungsrichtungen zu machen, da dadurch die Terme aussagekräftiger gemacht werden können. Es werden in diesen Fällen entsprechend aufgebaute Formeln zur Verknüpfung der Helligkeiten zu einem Term verwendet.

Bei den Einrichtungen gemäß den Fig. 2 bis 4 schließen die Beleuchtungsrichtungen 13,13' Azimutwinkel von 180° ein, d.h. sie befinden sich in einer Ebene. Die Höhenwinkel $\alpha_1$ und $\alpha_2$ könnten durchaus gleich groß sein.

Fig. 5 zeigt eine Anordnung, bei der zur Beleuchtung der Gegenstandzeile Z eine einzige in verschiedene Stellungen verstellbare Beleuchtungseinrichtung 4 vorhanden ist mit der unter verschiedenen Beleuchtungsrichtungen 13,13' und 13" hintereinander Licht auf die Gegenstandszeile Z einstrahlbar ist. Fig. 5 verdeutlicht, daß drei oder mehr Beleuchtungseinrichtungen 4,4' und 4" vorhanden sein können, die Licht unter unterschiedlichen Einstrahlrichtungen auf die Gegenstandszeile Z abgeben können. Die Höhenwinkel der Einstrahlungsrichtungen 13, 13' und 13" sind mit $\alpha_1$, $\alpha_2$ und $\alpha_3$ bezeichnet. Azimutwinkel sind nicht vorhanden, da angenommen ist, daß die drei Beleuchtungseinrichtungen 4,4' und 4" in einer Ebene, im vorliegenden Fall in der Bildebene, gelegen sind.

In Fig. 5 ist dargestellt, daß die Beleuchtungseinrichtungen 4,4' und 4" Licht nicht in scharf gebündelter Form auf die Gegenstandszeile Z abstrahlen, sondern diffuses Licht. Unter diffusem Licht wird insbesondere Licht verstanden, das z.B. von einer Streuscheibe abgegeben wird bzw. Licht, das von Beleuchtungseinrichtungen mit einer beträchtlichen, endlichen Erstrekkung abgegeben wird. Trotzdem kann diesem Licht, das von einer Lichtfläche abgegeben wird, eine Beleuchtungsrichtung zugeordnet werden, was leicht verständlich ist, wenn man Fig.5 betracht. Eine diffuse Beleuchtung mit einer in Fig. 5 rechts von der optischen Achse A der Kamera 4 gelegenen Beleuchtungseinrichtung wird andere Lichtreflexionen der Gegenstandszeile in die Kamera 4 erbringen als eine Beleuchtung der Gegenstandszeile Z mit einer Beleuchtungseinrichtung, die links von der optischen Achse der Kamera 4 gelegen ist. Sogar eine Anordnung von Beleuchtungseinrichtungen auf nur einer Seite der Kamera, wie es in Fig. 5 auf der rechten Seite der optischen Achse A der Fall ist, wobei die Höhenwinkel $\alpha_1$, $\alpha_2$ und $\alpha_3$ der einzelnen Beleuchtungseinrichtungen 4,4' und 4" unterschiedlich sind, gibt aufgrund der verschiedenen Reflexionen des eingestrahlten Lichtes bereits auswertbare Bilder.

Mit 32 ist eine Einrichtung der einzelnen Beleuchtungseinrichtungen 4,4',4" angedeutet, mit der die Lichtöffnung bzw. die abstrahlende Lichtfläche der Beleuchtungseinrichtungen 4,4',4" verändert werden kann. Je nach Oberflächenbeschaffenheit kann es von Vorteil sein, die Gegenstandszeile Z scharf gebündelt oder mit einer mehr oder weniger großen Lichtfläche zu beleuchten.

Bei der Anordnung gemäß Fig. 5 wird für jede einzelne von der Gegenstandszeile Z mit der Kamera 4 gemachte Aufnahme eine andere der Beleuchtungseinrichtungen 4,4',4" zum entsprechenden Zeitpunkt eingeschaltet.

Unter einer Beleuchtungsrichtung kann insbesondere eine Richtung, senkrecht zur Lichtabstrahlfläche der Beleuchtungseinrichtung 4 verstanden werden bzw. die Richtung zwischen der Gegenstandszeile Z und der Beleuchtungseinrichtung 4 bzw. die Richtung aus der der Hauptanteil des von der Beleuchtungseinrichtung zur Gegenstandszeile Z abgestrahlten Lichtes eintrifft. Auch bei praktisch punktförmigen Lichtquellen erhält jede Gegenstandszeile Licht aus einem gewissen Raumwinkelbereich bzw. einer räumlichen Fläche, sodaß man eigentlich immer von einer mehr oder weniger stark diffusen Beleuchtung der Gegenstandszeile Z sprechen könnte.

Fig. 6 zeigt eine Draufsicht auf einen Gegenstand 1 mit einer Gegenstandszeile 2. Bei dieser Anordnung sind drei Beleuchtungseinrichtungen 4,4',4" vorgesehen, welche die Gegenstandszeile Z unter unterschiedlichen Azimutwinkeln $\beta_1$, $\beta_2$ und $\beta_3$ beleuchten. Zur genauen Festlegung einer Beleuchtungsrichtung 13 bzw. 13' und 13" sind Angaben bezüglich des Höhenwinkels a und des Azimutwinkels $\beta$ erforderlich. Es ist möglich, gemäß gewünschten Vorgaben oder angepaßt an die Beschaffenheit der Oberfläche des zu untersuchenden Gegenstandes 1 die Höhenwinkel $\alpha$ und/oder die Azimutwinkel $\beta$ zu variieren. Gleichzeitig ist es noch möglich, die Bündelung des Lichtstrahls zwischen scharf und diffus zu verändern. Damit wird eine Vielzahl von Anpassungsmöglichkeiten geboten.

In Fig. 6 sind die Azimutwinkel $\beta$ dargestellt als eine Projektion in eine Ebene, welche die Gegenstandszeile Z enthält bzw. senkrecht zur optischen Achse A der Kamera 4 ausgerichtet ist.

Es ist durchaus möglich, auch mehr als drei Beleuchtungseinrichtungen 4,4' und 4" zu sehen, die durch entsprechende Höhenwinkel und Azimutwinkel definiert sind.

Eine Beleuchtungsanordnung gemäß Fig. 5 und Fig. 6 eignet sich insbesondere um Aufnahmen der Gegenstandszeilen unter einer jeweiligen Beleuchtung mit den Farben rot, grün und blau vorzunehmen, wobei vorteilhafterweise die Beleuchtungsrichtungen Azimutwinkel von 120° zueinander aufweisen. Bei einer derartigen Anordnung können vorteilhafterweise die von den Gegenstandspunkten reflektierten Helligkeiten in Hinblick auf die Farben rot, grün und blau ausgewertet werden bzw. ein Buntton-Term und ein Sättigungs-Term ermittelt werden, wobei das Bunttonbild des Gegenstandes oder ein Grauwertbild mit hoher Auflösung als Intensitätsbild zur Verfügung gestellt werden kann, wogegen die Sättigungsbilder mit geringerer Auflösung zur Verfügung gestellt werden, wodurch der notwendige Rechenaufwand zur Auswertung der Bilder verringert wird. Da die Sättigungsbilder insbesondere gut die Helligkeitsverhältnisse bzw. Terme der einzelnen Gegenstandspunkte erkennen lassen, sind diese auch bei geringerer Auflösung geeignet, eine gute Fehlererkennung zuzulassen.

Prinzipiell ist es möglich, mit nur einer Beleuchtungseinrichtung Aufnahmen von Gegenstandszeilen unter unterschiedlichen Lichteinfallswinkeln vorzunehmen, soferne die Beleuchtungseinrichtung entsprechend rasch die Beleuchtungsrichtung abändern kann, wozu z.B. Spiegelsysteme einsetzbar sind.

In Fig. 1 sind die Beleuchtungseinrichtungen, die den einzelnen Kameras 2 zugeordnet sind, nicht dargestellt.

Mit einer Steuereinheit 14 werden die Kameras und die Beleuchtungseinrichtungen 4 zur Aufnahme bzw. zur Belichtung gesteuert bzw. wird die Relativbewegung von Kamera 2 und Gegenstand 1 berücksichtigt.

Nachdem die Verhältnisse der Helligkeiten in der Verknüpfungseinheit 6 ermittelt bzw. entsprechende Terme aus den von den Sensorpunkten S für die einzelnen Gegenstandspunkte 9 ermittelten Helligkeiten errechnet wurden, werden diese Terme gegebenenfalls nach einer Zwischenspeicherung im Zwischenspeicher 19 rechnerisch ausgewertet und/oder einem Helligkeitsregler 7 zugeführt, der die Helligkeit der Bildpunkte BP der einzelnen Bildschirmzeilen BZ des Bildschirmes 3 einregelt. Dabei kann derart vorgegangen werden, daß entsprechend den aufgenommenen Gegenstandszeilen Z Bildschirmzeilen BZ generiert werden, wobei ein Bildschirmpunkt BP einer Anzahl von Gegenstandspunkten P entspricht. Diese Zuordnung kann jedoch auch anders festgelegt werden, es können Gegenstandspunkte P in Bildschirmzeilen BZ unterdrückt oder jedem Gegenstandspunkt P ein Sensorpunkt S eines Zeilensensors 5 und ein Bildschirmpunkt BZ zugeordnet werden. Die Auflösung kann durch Veränderung des Abstandes zwischen der Kamera und dem Gegenstand bzw. durch Auswahl entsprechender Optiken abgeändert werden.

Mit einem Streifen bzw. Mantelbildner 8 können die von einzelnen Kameras 2 aufgenommenen Gegenstandszeilen Z bzw. daraus abgeleiteten Terme derart zusammengesetzt werden, daß bei um den Umfang des Gegenstandes 1 angeordneten Kameras 2 die von den einzelnen Flächen 9', 10', 11', 12' des Gegenstandes 1 stammenden Gegenstandszeilen Z - wie in der obersten Bildschirmzeile BZ des Bildschirmes 3 in Fig. 1 gezeigt - nebeneinander als Teile 9, 10, 11, 12 dieser Bildschirmzeile BZ nebeneinander abgebildet werden, sodaß am Gegenstand neben- und untereinanderliegende Gegenstandszeilen Z als Netz bzw. Teilnetz des Gegenstandes 1 abgebildet werden. Einander überlappende Bereiche von Gegenstandszeilen Z, die aufgrund der einander überlappenden Aufnahmebereiche der Kameras 2 vorhanden sind, werden rechnerisch im Streifen- bzw. Mantelbildner 8 unterdrückt.

In dem Vergleicher 18 sind vorgegebene Vergleichsterme gespeichert und/oder es werden von ihm laufend Vergleichsterme ermittelt. Diese Vergleichsterme werden mit den gebildeten Termen der einzelnen Gegenstandspunkte P oder den gemittelten Termen von nebeneinanderliegenden Gegenstandspunkten P verglichen; soferne ein Toleranzwert bei diesem Vergleich überschritten wird, können die entsprechenden Bildpunkte BP als Fehler markiert werden.

Vorteilhafterweise werden in Abtastrichtung 23 aufeinanderfolgende Gegenstandspunkte P bezüglich ihrer Terme verglichen; ändern sich die ermittelten Terme über eine gewisse Abtaststrecke 23 nicht, so kann angenommen werden, daß es sich um einen ordnungsgemäßen Oberflächenbereich des Gegenstandes 1 handelt; die erhaltenen Terme können gemittelt und dieser Mittelwert als Vergleichsterm für Vergleiche mit Termen anderer Gegenstandspunkte P zur Verfügung gestellt werden.

Mit einer Monitorsteuerung 17 werden die Helligkeitswerte der einzelnen Bildschirmpunkte BP in Abhängigkeit von für Gegenstandspunkte oder für Gruppen von Gegenstandspunkten P ermittelten Termen gesteuert; des weiteren werden von der Monitorsteuerung 17 die von den einzelnen Kameras 2 ermittelten Gegenstandszeilen Z nach entsprechender Aufbereitung in dem Streifen- bzw. Mantelbildner 8 in den einzelnen Bildschirmzeilen BZ zur Darstellung gebracht.

Es könnte zur Visualisierung vorgesehen sein, daß ein ausgewählter Gegenstandsbereich, der eine bestimmte Anzahl von Gegenstandszeilen Z umfaßt, auf dem Bildschirm 3 zur Darstellung gebracht und für eine gewünschte Zeitspanne dargestellt wird.

Eine vorteilhafte Möglichkeit zur Betrachtung ist in Fig. 1 dargestellt. Bei dieser Vorgangsweise wird in der obersten Bildschirmzeile BZ eine Anzahl von mit um den Gegenstand 1 herum angeordneten Kameras 2 aufgenommenen Gegenstandszeilen Z über einen gewissen Teilbereich T dieser Bildschirmzeile, vorzugsweise in deren Mittelbereich, dargestellt. Dieser Teilbereich T der Bildschirmzeile BZ entspricht einer Mantelzeile des Gegenstandes und ist aus einer Anzahl von Gegenstandszeilen Z, aufgenommen mit unterschiedlichen Kameras, zusammengesetzt. Während diese Bildschirmzeile BZ den Bildschirm abwärts verstellt wird und dabei den Eindruck vermittelt, daß die Oberfläche des Gegenstandes 1 sich auf den Beobachter zubewegt, wird die Breite dieses Teilbereiches T fortlaufend vergrößert, bis etwa in der Mitte des Bildschirmes 3 dieser Teilbereich T eine Breite $B_{max}$ bzw. die Länge einer Bildschirmzeile erreicht hat. Unterhalb der Bildschirmmitte verringert der Teilbereich T seine Breite bis im unteren Bildschirmbereich eine minimale Breite $B_{min}$ erreicht wird, die etwa der Breite des Teilbereiches T in der obersten Bildschirmzeile BZ entspricht. Diese Betrachtungsweise ist für eine visuelle Überprüfung sehr angenehm, da dem Betrachter der Eindruck vermittelt wird, daß sich der Gegenstand auf ihn zubewegt, wobei der Gegenstand in halber Bildhöhe seine größte Breite und Auflösung besitzt, und Veränderungen im Zuge der vermeintlichen Bewegung auf der Oberfläche gut detektiert werden können.

Der für eine fehlerfreie Oberfläche ermittelte Vergleichsterm könnte auch als Basiswert für die Grundhelligkeit sämtlicher Bildschirmpunkte gesetzt werden; dieser Basiswert könnte absolut hell oder absolut dunkel oder ein Mittelwert sein. Prinzipiell könnte vorgesehen sein, daß die Beleuchtung der Gegenstandszeilen Z - so wie sie in den Fig. 2 bis 4 dargestellt ist - jeweils von Richtungen aus erfolgt, die auf der einen Seite einer die Längsrichtung des Zeilensensors 5 enthaltenen Ebene und auf der anderen Seite verläuft. Es ist auch möglich, Beleuchtungseinrichtungen 4, 4' vorzusehen, deren Einstrahlrichtung 13 in einer Ebene liegt, welche die Längserstreckung des Zeilensensors 5 enthält. Die Beleuchtungsrichtungen 13,13',13" und die Anzahl der unter verschiedenen Beleuchtungsrichtungen vorgenommenen Aufnahmen hängt von der Oberflächenbeschaffenheit bzw. von der Art der zu detektierenden Fehler ab.

Es zeigte sich in der Praxis, daß vor allem Fehler gut detektierbar sind, bei denen eine abrupte Änderung des Verlaufes der Oberfläche des Gegenstandes vorliegt, da in diesem Fall die Änderung des Verhältnisses der Helligkeitswerte bzw. der Terme von in Abtastrichtung 23 aufeinanderfolgenden Gegenstandspunkten P besonders groß ist. Auf diese Weise konnten sehr dünne Risse gut detektiert werden.

Die Beleuchtungseinrichtungen 4, 4' befinden sich vorzugsweise in einer Normalebene zur Längserstreckung des Zeilensensors 5; zweckmäßigerweise kann vorgesehen sein, daß die Beleuchtungsrichtungen zusätzlich noch einen Winkel von etwa 10° bis 30° mit der Abtastrichtung 23 einschließen.

Unter Licht wird das von Infrarot bis UV reichende Spektrum verstanden; vorteilhaft eignet sich für die Detektion Licht im infraroten und roten Bereich.

Soferne die Helligkeitswerte von nebeneinanderliegenden Gegenstandspunkten gemittelt werden und diese gemittelten Helligkeitswerte, die von Aufnahmen unter unterschiedlichen Beleuchtungsrichtungen stammen, ins Verhältnis gesetzt werden, so erhält man Terme, die Flächenbereiche charakterisieren. Prinzipiell ist es möglich, durch entsprechende Wahl der Sensoren, der Bildpunkte, der Optiken usw., die Auflösung der Oberfläche des Gegenstandes 1 in entsprechende Gegenstandspunkte P den Umständen entsprechend anzupaßt vorzunehmen.

Die Auswerteeinheit 30 wird durch entsprechend programmierte Hardware-Bauteile realisiert, welche die angegebenen Funktionen erfüllen können.

Zwischen den Fig. 4 und 16 besteht ein darstellungsmäßiger Zusammenhang. Fig. 4 könnte als Vorderansicht einer in Fig. 6 in Draufsicht dargestellten Einrichtung angesehen werden. Es wäre sodann lediglich ein weiterer teildurchlässiger Spiegel 16 vorzusehen, mit dem Licht der Beleuchtungseinrichtung 4" das mit der Beleuchtungsrichtung 13" unter dem Höhenwinkel $\alpha_3$ und unter dem Azimutwinkel $\beta_3$, bezogen auf die Beleuchtungsrichtung 13 eingestrahlt wird, in die Kamera 2" geleitet wird, welche der Beleuchtungseinrichtung 4" zugeordnet ist.

## Patentansprüche

1. Verfahren zur Feststellung, insbesondere zur Visualisierung, von Fehlern auf der Oberfläche von insbesondere langgestreckten Gegenständen, z.B. Schienen, Profilteilen, Rohren od.dgl., wobei Bilder des Gegenstandes mit zumindest einer Videokamera aufgenommen und ausgewertet, insbesondere auf einem Monitor oder Bildschirm dargestellt werden, wobei aus einer Reihe von nebeneinanderliegenden Gegenstandspunkten bestehende Gegenstandszeilen mit zumindest einer Zeilen- oder TDI-Kamera in einer durch die Richtung der Relativbewegung zwischen der jeweiligen Kamera und dem Gegenstand vorgegebenen Abtastrichtung aufeinanderfolgend abgetastet bzw. aufgenommen werden, dadurch gekennzeichnet,

   - daß zumindest zwei Bilder derselben Gegenstandszeile bei unterschiedlichen Beleuchtungsrichtungen aufgenommen werden,
   - daß die von den Sensorpunkten des Zeilensensors bei den jeweiligen unterschiedlichen Beleuchtungsrichtungen gemessenen Helligkeitswerte der einzelnen Gegenstandspunkte oder einer Anzahl von nebeneinanderliegenden Gegenstandspunkten (Flächenbereich) nach einer vorgegebenen Formel zu einem Term verknüpft werden, der vorzugsweise einen Verhältniswert der Helligkeitswerte darstellt, und
   - daß die Terme visuell und/oder rechnerisch ausgewertet werden.

2. Verfahren nach Anspruch 1, dadurch gekennzeichnet, daß die Helligkeit des(r) einem Gegenstandpunkt oder nebeneinanderliegenden Gegenstandspunkten entsprechenden Bildschirmpunkte(s) am Bildschirm in Abhängigkeit von dem Wert des für den Gegenstandspunkt oder für die nebeneinanderliegenden Gegenstandspunkte errechneten Termes eingestellt bzw. vorgegeben wird.

3. Verfahren nach Anspruch 1 oder 2, dadurch gekennzeichnet, daß die in Abtastrichtung aufeinanderfolgend aufgenommenen Gegenstandszeilen am Bildschirm als aufeinanderfolgende Bildschirmzeilen mit durch die jeweiligen Terme der Gegenstandspunkte bzw. der nebeneinanderliegenden Gegenstandspunkte vorgegeber Helligkeit der Bildschirmpunkte dargestellt werden.

4. Verfahren nach einem der Ansprüche 1 bis 3, dadurch gekennzeichnet, daß zur Auswertung Terme der Helligkeiten von in Abtastrichtung aufeinanderfolgend gelegenen Gegenstandspunkten und/oder Terme von in einer Gegenstandszeile nebeneinander gelegenen Gegenstandspunkten ermittelt werden.

5. Verfahren nach einem der Ansprüche 1 bis 4, dadurch gekennzeichnet,

- daß vor der Ermittlung der Terme von nebeneinanderliegenden Gegenstandspunkten (Gegenstandsflächenbereich) die Helligkeiten einer Anzahl von in Abtastrichtung aufeinanderfolgend gelegenen Gegenstandspunkten und/oder von in einer Gegenstandszeile nebeneinander gelegenen Gegenstandspunkten gemittelt werden und/oder
- daß zur Auswertung die Terme einer Anzahl von in Abtastrichtung aufeinanderfolgend gelegenen Gegenstandspunkten und/oder die Terme einer Anzahl von in Gegenstandszeilen nebeneinander gelegenen Gegenstandspunkten gemittelt werden und/oder
- daß die Aufnahmezeilen von TDI-Kameras im Takt in Abhängigkeit von der Relativbewegung zwischen dem Gegenstand und der den Gegenstand abtastenden Kamera weitergeschaltet werden und die Werte der in den einander entsprechenden Sensorpunkten der Sensorzeilen des Zeilensensors gemesenen Helligkeiten summiert und/oder gemittelt werden.

6. Verfahren nach einem der Ansprüche 1 bis 5, dadurch gekennzeichnet,

- daß die optische Achse der Kamera(s) und die Zeile(n) des Sensorchips der Kamera(s) insbesondere in einer Normalebene zur Abtastrichtung ausgerichtet werden, daß mit jeder Kamera hintereinander eine Anzahl von in Abtastrichtung aufeinanderfolgenden Gegenstandszeilen aufgenommen wird und
- daß vorzugsweise jedem der Gegenstandspunkte einer Gegenstandszeile oder einer Anzahl von in einer Gegenstandszeile nebeneinanderliegenden Gegenstandspunkten zumindest ein Sensorpunkt des Sensorchips der Kamera und gegebenenfalls zumindest ein Bildschirmpunkt in einer Bildschirmzeile des Bildschirmes bzw. des Monitors zugeordnet wird, wobei vorteilhafterweise Gegenstandszeilen als Bildschirmzeilen abgebildet werden und/oder

- daß eine aufgenommene Gegenstandszeile, vorzugsweise in der Mitte der obersten Bild- bzw. Bildschirmzeile, über einen vorgegebenen Längenbereich dieser Bild- bzw. Bildschirmzeile dargestellt wird,
- daß dieselbe Gegenstandszeile in vorgegebenen Zeitabständen in den darunterliegenden Bildschirmzeilen jeweils mit zunehmender Breite bis zu einer maximalen Breite dargestellt wird, insbesondere bis sie sich über die gesamte vorgesehene Bild- bzw. Bildschirmbreite, vorzugsweise im Bereich der halben Bildschirmhöhe, erstreckt, und
- daß diese Gegenstandszeile maximaler Breite bei ihrer Abbildung in den folgenden darunterliegenden Bildschirmzeilen mit abnehmender Breite und in der untersten Bildzeile mit einer vorgegebenen minimalen Breite dargestellt wird.

7. Verfahren nach einem der Ansprüche 1 bis 6, dadurch gekennzeichnet,

- daß am Gegenstand nebeneinandergelegene Gegenstandszeilen mit einer Anzahl von zumindest über einen Teilbereich des Umfanges des Gegenstandes herum angeordneten Kameras aufgenommen werden und/oder
- daß um den Gegenstand verlaufende Gegenstandszeilen mit den Umfang des Gegenstandes zumindest teilweise erfassenden Kameras aufgenommen werden und die von den einzelnen Gegenstandszeilen abgeleiteten Bildschirmzeilen auf den Zeilen des Bildschirmes nebeneinanderliegend, insbesondere in Form von nebeneinanderliegenden Bildstreifen, zu einem Teilmantel oder Vollmantel des Gegenstandes zusammengesetzt dargestellt werden.

8. Verfahren nach einem der Ansprüche 1 bis 7, dadurch gekennzeichnet, daß der Term der Helligkeitswerte eines Gegenstandspunktes oder der gemittelten Helligkeitswerte einer Anzahl von nebeneinanderliegenden Gegenstandspunkten nach der Formel

$$\frac{a-b}{a+b+1}$$

ermittelt wird, wobei a und b die ermittelten Helligkeitswerte des(r) jeweils betrachteten Gegenstandspunkte(s) sind, welche Helligkeitswerte für zwei unterschiedliche Beleuchtungsrichtungen ermittelt wurden.

9. Verfahren nach einem der Ansprüche 1 bis 8, dadurch gekennzeichnet,

-   daß die Beleuchtungsrichtungen, unter denen die jeweilige Gegenstandszeile beleuchtet wird, gemessen in einer Projektion auf eine Normalebene zur optischen Achse der Kamera, miteinander (Azimut)Winkel zwischen 70° und 180°, vorzugsweise von 120°, einschließen und/oder
-   daß die Beleuchtungsrichtungen mit der Oberfläche des Gegenstandes einen Winkel von 20° bis 60° einschließen und/oder
-   daß die Gegenstandspunkte bzw. Gegenstandszeilen aus Richtungen beleuchtet werden, die auf gegenüberliegenden Seiten einer die optische Achse der Kamera enthaltenden Normalebene zur Abtastrichtung und/oder auf gegenüberliegenden Seiten einer von der Abtastrichtung und der optischen Achse der Kamera aufgespannten Ebene gelegen sind

10. Verfahren nach einem der Ansprüche 1 bis 9, dadurch gekennzeichnet, daß eine Gegenstandszeile mit zumindest zwei in bezug auf die Abtastrichtung hintereinander angeordneten Kameras zu aufeinanderfolgenden Zeitpunkten aufgenommen wird, wobei bei den Aufnahmen mit den einzelnen Kameras die Beleuchtungsrichtung unterschiedlich gewählt wird und die Aufnahmezeitpunkte der einzelnen Kameras zur Abbildung derselben Gegenstandszeile in Abhängigkeit von der Relativbewegung zwischen den Kameras und dem Gegenstand gewählt werden und/oder

-   daß dieselbe Gegenstandszeile mit einer Kamera in zeitlichen Abständen mehrfach aufgenommen wird, wobei bei jeder Aufnahme eine Beleuchtung der Gegenstandszeile unter einer unterschiedlichen Beleuchtungsrichtung erfolgt und/oder
-   daß mit einer Mehrzahl von Kameras dieselbe Gegenstandszeile zur gleichen Zeit aufgenommen wird, wobei die Gegenstandszeile gleichzeitig unter unterschiedlichen Beleuchtungsrichtungen beleuchtet wird, wobei das unter den unterschiedlichen Beleuchtungsrichtungen eingestrahlte Licht jeweils voneinander unterschiedliche Wellenlänge aufweist und wobei den Kameras Farbfilter vorgesetzt sind, die jeweils nur für eine der eingesetzten Wellenlängen durchlässig sind, wobei gegebenenfalls das den einzelnen Kameras das von der Gegenstandszeile ausgehende Licht über einen Lichtteiler, vorzugsweise einen teildurchlässigen Spiegel, zugeführt wird.

11. Verfahren nach einem der Ansprüche 1 bis 10, dadurch gekennzeichnet, daß die Gegenstandszeilen aus drei verschiedenen Beleuchtungsrichtungen, die vorzugsweise miteinander Azimut(Winkel) von 120° einschließen, mit Licht unterschiedlicher Wellenlänge, vorzugsweise rotem, blauem und grünem Licht, beleuchtet werden, und daß aus den erhaltenen Helligkeiten der Buntton und die Farbsättigung des Farbbildes eines Gegenstandspunktes oder nebeneinanderliegender Gegenstandspunkte ermittelt und ausgewertet werden und/oder

-   daß ein Bild des Gegenstandes bzw. der Gegenstandszeile in einer Farbe oder als Grauwertbild als Intensitätsbild hochauflösend aufgenommen und zur Verfügung gestellt wird und daß die Helligkeitswerte bzw. Terme der Gegenstandspunkte bzw. von nebeneinanderliegenden Gegenstandspunkten mit im Vergleich dazu geringerer Auflösung ermittelt bzw. aufgenommen oder zur Verfügung gestellt werden und/oder
-   daß die Beleuchtung der Gegenstandszeile aus der jeweiligen Beleuchtungsrichtung mit diffusem Licht erfolgt und/oder
-   daß die Beleuchtung der Gegenstandszeile aus der jeweiligen Beleuchtungsrichtung aus einem vorgegebenen, gegebenenfalls in seiner Größe einstellbaren, Raumwinkel- bzw. -flächenbereich erfolgt.

12. Verfahren nach einem der Ansprüche 1 bis 1, dadurch gekennzeichnet,

-   daß in Abtastrichtung bzw. in Richtung der Relativbewegung zwischen Gegenstand und Kamera(s) aufeinanderfolgend aufgenommene Gegenstandszeilen aufeinanderfolgend, insbesondere von oben nach unten weiterbewegt, als Bildschirmzeilen mit Bildpunkten, deren Helligkeit durch die Terme der Gegenstandspunkte bestimmt ist, am Monitor bzw. Bildschirm dargestellt werden und/oder
-   daß die ermittelten Helligkeiten oder die Terme von in Abtastrichtung aufeinanderfolgenden Gegenstandspunkten über eine vorgegebene Abtastlänge gemittelt werden und dieser Mittelwert der Einstellung der Grundhelligkeit des Monitors bzw. Bildschirms, gegebenenfalls als eine mittlere Helligkeit, vorgegeben wird, wobei Gegenstandspunkte, die von diesem Mittelwert abweichende Terme besitzen, als Bildpunkte mit größerer oder geringerer Helligkeit dargestellt werden.

13. Verfahren nach einem der Ansprüche 1 bis 12, dadurch gekennzeichnet, daß der Aufnahmebereich der einzelnen Kameras größer gewählt wird als die Erstreckung des Gegenstandes bzw. daß die Aufnahmebereiche der einzelnen Kameras bzw. die von nebeneinanderliegenden Kameras aufgenommenen Gegenstandszeilen sich überschneiden und/oder

- daß, insbesondere zur Darstellung auf dem Bildschirm, Überschneidungen der von den einzelnen Kameras aufgenommenen Gegenstandszeilen beim Zusammensetzen der Gegenstandszeilen zu einer Teil- oder Vollmantelzeile des Gegenstandes, vorzugsweise rechnerisch, enffernt werden.

14. Verfahren nach einem der Ansprüche 1 bis 13, dadurch gekennzeichnet, daß der für einzelne Gegenstandspunkte und/oder für eine Gruppe von nebeneinanderliegenden Gegenstandspunkten ermittelte Term mit einem vorgegebenen oder ermittelten, insbesondere aus den Helligkeitswerten oder Termen von einer Anzahl von in Abtastrichtung aufeinanderfolgend gelegenen Gegenstandspunkten errechneten oder gemittelten, oder nach einer vorgegebenen Formel berechneten Vergleichsterm verglichen wird und das Vergleichsergebnis zur Verfügung gestellt wird, wobei gegebenenfalls bei Überschreiten eines Toleranzwertes eine Markierung von derartige Terme aufweisenden Gegenstandszeilen bzw. Gegenstandspunkten, z.B. durch Herausheben auf dem Monitor, erfolgt.

15. Einrichtung zur Feststellung, insbesondere zur Visualisierung, von Fehlern auf der Oberfläche von insbesondere langgestreckten Gegenständen, z.B. Schienen, Profilteilen, Rohren od.dgl., wobei Bilder des Gegenstandes (1) mit zumindest einer eine Relativbewegung zum Gegenstand durchführenden Videokamera aufgenommen, einer Auswerteeinheit (30) zugeführt und gegebenenfalls auf einem Monitor bzw. Bildschirm (3) dargestellt werden, wobei zur Aufnahme von Gegenstandszeilen (Z) des Gegenstandes (1) zumindest eine Zeilen- oder TDI-Kamera (2, 2') vorgesehen ist und die Bildsignale des(r) Zeilensensors(en) (5) jeder Kamera (2, 2') einer Auswerteeinheit (30) zugeführt sind, insbesondere zur Durchführung des Verfahrens nach einem der Ansprüche 1 bis 14, dadurch gekennzeichnet,

- daß die Zeilen- oder TDI-Kamera(s) (2, 2') zur zumindest zweifachen Aufnahme einer Gegenstandszeile (Z) eingerichtet bzw. vorgesehen ist (sind), und damit in Aufeinanderfolge Bilder von sich vorzugsweise senkrecht zu der durch die Richtung der Relativbewegung gegebenen Abtastrichtung (23) am Gegenstand (1) erstreckenden Gegenstandszeilen (Z) aufgenommen (wird) werden, wobei jede Gegenstandszeile (Z) für jede der einzelnen Aufnahmen unter einer unterschiedlichen Beleuchtungsrichtung (13, 13') mit zumindest einer Beleuchtungseinrichtung (4, 4') beleuchtet ist und
- daß die Auswerteeinheit (30) eine Verknüpfungseinheit (6) umfaßt, in der die bei den jeweiligen Beleuchtungsrichtungen (13, 13') sich ergebenden Helligkeitswerte von bzw. der einzelnen Gegenstandspunkte(n) (P) dieser zumindest zweifach aufgenommenen Gegenstandszeile (Z) oder von einer Anzahl von in dieser und von in benachbarten bzw. folgenden Gegenstandszeilen (Z) nebeneinanderliegenden Gegenstandspunkten (Flächenbereich) nach einer vorgegebenen Formel zu einem Term verknüpft werden, wobei gegebenenfalls ein Verhältniswert der bei den aufeinanderfolgenden Aufnahmen ermittelten Helligkeitswerte errechnet wird, welcher Term zur Auswertung gespeichert und/oder bereitgestellt wird.

16. Einrichtung nach Anspruch 15, dadurch gekennzeichnet, daß die Werte der in der Verknüpfungseinheit (6) ermittelten Terme als Stellsignale für die Helligkeit der Bildschirmpunkte (BP) einem Helligkeitsregler (7) des Monitors bzw. Bildschirmes (3) zugeführt sind und/oder

- daß zur Abbildung bzw. Darstellung von in Abtastrichtung (23) aufeinanderfolgend aufgenommenen Gegenstandszeilen (7) am Monitor (3) als aufeinanderfolgende Bildschirmzeilen (BZ) der Verknüpfungseinheit (6) eine Monitorsteuerung (17) nachgeschaltet ist..

17. Einrichtung nach Anspruch 15 oder 16, dadurch gekennzeichnet, daß die Verknüpfungseinheit (6) einen Mittelwertbildner (31) aufweist, dem die Helligkeitswerte oder die Terme einer Anzahl von nebeneinanderliegenden Gegenstandspunkten (P) vor der Verknüpfung zu Termen oder vor der Auswertung zugeführt sind und/oder

- daß die Verknüpfungseinheit (6) eine Anzahl von Termen von in Abtastrichtung (23) aufeinanderfolgend gelegenen Gegenstandspunkten (P) mittelt, daß dieser Mittelwert als Grundhelligkeit des Bildschirms (3), gegebenenfalls als mittlere Helligkeit, der Monitorsteuerung (17) vorgegeben ist, und daß von diesem Mittelwert abweichende Terme besitzende Gegenstandspunte (P) als Bildpunkte (BP) mit größerer oder geringerer Helligkeit dargestellt sind.

18. Einrichtung nach einem der Ansprüche 15 bis 17, dadurch gekennzeichnet, daß die optische Achse (A) der Kamera(s) (2, 2') und der Zeilensensor (5) des Sensorchips der Kamera(s) (2, 2') in einer Normalebene zur Abtastrichtung (23) ausgerichtet sind.

19. Einrichtung nach einem der Ansprüche 15 bis 18, dadurch gekennzeichnet, daß zur Aufnahme von, insbesondere senkrecht zur Abtastrichtung (23), in ihrer Längsrichtung aufeinanderfolgenden bzw. sich in Umfangsrichtung erstreckenden Gegenstandszeilen (Z) eine Anzahl von den Gegenstand (1) über Teilbereiche seines Umfangs erfassenden Zeilen- bzw. TDI-Kameras (2, 2') angeordnet ist und daß die von den einzelnen Kameras (2, 2') erhaltenen Gegenstandszeilen (Z) von einem Streifen- bzw. Mantelbildner (8) nebeneinander in einer Bildzeile (BZ) des Bildschirmes (3) abgebildet sind, sodaß die als untereinander am Bildschirm (3) abgebildete, in Abtastrichtung aufeinanderfolgend aufgenommene Gegenstandszeilen in Form von nebeneinanderliegenden Bildstreifen (9, 10, 11, 12 ...) einen Teilmantel oder Vollmantel des Gegenstandes (1) ergeben.

20. Einrichtung nach einem der Ansprüche 15 bis 19, dadurch gekennzeichnet, daß die Beleuchtungsrichtung bzw. die Einstrahlachsen (13, 13') der Beleuchtungseinrichtungen (4, 4') auf gegenüberliegenden Seiten einer die optische Achse (A) der jeweiligen Kamera (2, 2') enthaltenden Normalebene zur Abtastrichtung (23) und/oder einer von der Abtastrichtung (23) und der optischen Achse (A) der Kamera (2, 2') aufgespannten Ebene gelegen sind und/oder

- daß die Beleuchtungsrichtung bzw. die Einstrahlachse (13, 13', 13") der Beleuchtungseinrichtungen (4, 4') mit der Oberfläche des Gegenstandes (1) einen Höhenwinkel ($\alpha_1$, $\alpha_2$) zwischen 20° und 60° einschließt und/oder
- daß die Beleuchtungsrichtungen (13, 13') miteinander einen Azimut-Winkel ($\beta_1$, $\beta_2$, $\beta_3$) von 80° bis 180° einschließen.

21. Einrichtung nach einem der Ansprüche 15 bis 20, dadurch gekennzeichnet, daß zur Aufnahme von mehreren Bildern einer Gegenstandszeile (Z) unter unterschiedlichen Beleuchtungsrichtungen (13, 13') zumindest zwei Kameras (2, 2') vorgesehen sind, denen jeweils eine Beleuchtungseinrichtung (4, 4') zugeordnet ist, deren Beleuchtungsrichtung (13, 13') in bezug auf diejenige der jeweils anderen Beleuchtungseinrichtung (4, 4') unterschiedlich ist, wobei die Aufnahmezeitpunkte der einzelnen Kameras (2, 2') von einer Steuereinheit (14) zur Berücksichtigung der Relativbewegung zwischen den Kameras (2, 2') und dem Gegenstand (1) festgelegt sind und/oder

- daß zur mehrfachen Aufnahme derselben Gegenstandszeile (Z) mit einer einzigen Kamera (2, 2') in zeitlichen Abständen eine Mehrzahl von Beleuchtungseinrichtungen (4, 4') vorgesehen ist, mit denen die Gegenstandszeile (Z) bei jeder Aufnahme unter einer unterschiedlichen Beleuchtungsrichtung (13, 13') beleuchtet ist und/oder

- daß zur gleichzeitigen Aufnahme derselben Gegenstandszeile (Z) unter unterschiedlichen Beleuchtungsrichtungen (13, 13', 13") eine Mehrzahl von Kameras (2) vorgesehen ist, denen eine Mehrzahl von Beleuchtungseinrichtungen (4, 4', 4") zugeordnet ist, mit denen die Gegenstandszeile (Z) unter unterschiedlichen Beleuchtungsrichtungen (13,13', 13") beleuchtet ist, wobei das von den einzelnen Beleuchtungseinrichtungen (4, 4', 4") unter der jeweiligen Beleuchtungsrichtung (13, 13', 13") eingestrahlte Licht jeweils unterschiedliche Wellenlänge aufweist und wobei den einzelnen Kameras (2) jeweils ein unterschiedliches Farbfilter (15, 15') vorgesetzt ist, das nur für eine der eingesetzten Wellenlängen durchlässig ist, wobei gegebenenfalls zur Aufteilung des von der beleuchteten Gegenstandszeile (Z) ausgehenden Lichtes auf die einzelnen Kameras (2, 2') zumindest ein Lichtteiler (16), z.B. ein teildurchlässiger Spiegel, vorgesehen ist.

22. Einrichtung nach einem der Ansprüche 15 bis 21, dadurch gekennzeichnet, daß die Beleuchtungseinrichtungen (4, 4') eine Lichtbündelungseinrichtung aufweisen oder daß die Beleuchtungseinrichtungen (4, 4') mit einem Diffusor, z.B. einer Streuglasscheibe, Reflektorschirmen od.dgl., versehene Lichtaustrittsöffnungen bzw. Lichtabgabebereiche aufweisen, die mit einer bestimmten Beleuchtungsrichtung (13, 13') auf die Gegenstandszeile (Z) abstrahlen und/oder

- daß die lichtaussendende Fläche der Beleuchtungseinrichtungen (4, 4') veränderbar ist, z.B. mit einer Blende einstellbar ist oder zu- bzw. wegschaltbare Lichtquellen aufweist.

23. Einrichtung nach einem der Ansprüche 15 bis 22, dadurch gekennzeichnet, daß eine Monitorsteuerung (17) vorgesehen ist, mit der in Abtastrichtung (23) aufeinanderfolgend gelegene Gegenstandszeilen (Z) als untereinanderliegende Bildschirmzeilen (BZ) mit Bildpunkten (BP) mit durch die ermittelten Terme der Gegenstandspunkte (P) vorgegebener Helligkeit am Monitor bzw. Bildschirm (3) dargestellt sind und/oder

- daß die Aufnahmebereiche der einzelnen Zeilen- bzw. TDI-Kameras (2, 2') einander überschneiden und daß in dem Streifen- bzw. Mantelbildner (8) Überschneidungen der Gegenstandszeilen (Z) beim Zusammensetzen zu einem Teil- oder Vollmantelbild des Gegenstandes (1) rechnerisch beseitigt werden und/oder
- daß die Monitorsteuerung (17) eine sich senkrecht zur Abtastrichtung erstreckende Gegenstandszeile (Z) in der obersten Bildschirmzeile (BZ) mit vorgegebener Breite ($B_{min}$) über einen vorgegebenen Teilbereich dieser Bildschirmzeile (BZ) darstellt,

- daß die Monitorsteuerung (17) diese Gegenstandszeile (Z) nach Ablauf einer, insbesondere durch die Abtastgeschwindigkeit bestimmten, Zeitspanne mit größerer Breite in der darunterliegenden Bildschirmzeile (BZ) darstellt und diese Gegenstandszeile (Z) in folgenden darunterliegenden Bildschirmzeilen (BZ) jeweils mit zunehmender Breite bis zu einer maximalen Breite ($B_{max}$), etwa in der halben Höhe des Bildschirmes, darstellt und

- daß die Monitorsteuerung (17) bei der fortschreitenden Abbildung dieser Gegenstandszeile (Z) etwa von der halben Bildschirmhöhe abwärts bis zum unteren Bildschirmrand die Breite dieser Gegenstandszeile (Z), insbesondere bis zu einer minimalen Breite ($B_{min}$), verringert.

24. Einrichtung nach einem der Ansprüche 15 bis 23, dadurch gekennzeichnet, daß, insbesondere in der Verknüpfungseinheit (6), ein Vergleicher (18) vorgesehen ist, in dem die für die einzelnen Gegenstandspunkte (P) oder Gruppen hievon ermittelten Terme mit einem vorgegebenen oder ermittelten, insbesondere aus einer Anzahl von Termen gemittelten, oder nach einer vorgegebenen Formel berechneten Vergleichsterm vergleichbar sind, und daß gegebenenfalls bei Überschreiten eines Toleranzwertes zumindest die auf dem Monitor (3) abgebildete, den (die) den vorgegebenen Toleranzwert überschreitende(n) Term(e) enthaltende(n) Gegenstandszeile(n) (Z) markiert wird (werden).

Fig. 1

Fig. 2

Fig. 3

Fig. 4

Fig. 7

Fig.5.

Fig 6

# EP 0 955 538 A1

**Europäisches Patentamt**

## EUROPÄISCHER RECHERCHENBERICHT

Nummer der Anmeldung

EP 99 89 0133

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 731 350 A (ANSALDO UN AZIENDA FINMECC) 11. September 1996 (1996-09-11) * Zusammenfassung * * Spalte 3, Zeile 1 - Spalte 4, Zeile 48; Anspruch 1; Abbildung 1 * --- | 1,15 | G01N21/89 G06T7/00 |
| X | DE 195 34 716 A (AUTRONIC BILDVERARBEITUNG) 20. März 1997 (1997-03-20) * Zusammenfassung; Abbildung * --- | 1,15 | |
| A | WO 94 14053 A (PRESSCO TECH INC) 23. Juni 1994 (1994-06-23) * Seite 13, Zeile 16 - Seite 18, Zeile 9 * --- | 1,15 | |
| A | WO 98 01746 A (COULTHARD MARTIN ;SURFACE INSPECTION LTD (GB)) 15. Januar 1998 (1998-01-15) * Zusammenfassung; Abbildung 1 * --- | 1,15 | |
| A | EP 0 536 570 A (FUTEC INC) 14. April 1993 (1993-04-14) * Zusammenfassung; Abbildung 1 * ----- | 1,15 | **RECHERCHIERTE SACHGEBIETE (Int.Cl.6)** G01N B01N |

Der vorliegende Recherchenbericht wurde für alle Patentansprüche erstellt

| Recherchenort | Abschlußdatum der Recherche | Prüfer |
|---|---|---|
| DEN HAAG | 5. August 1999 | Tabellion, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**
EP 99 89 0133

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-08-1999

| Im Recherchenbericht angeführtes Patentdokument | Datum der Veröffentlichung | Mitglied(er) der Patentfamilie | Datum der Veröffentlichung |
|---|---|---|---|
| EP 0731350 A | 11-09-1996 | IT MI950363 A<br>JP 8261950 A<br>US 5724093 A | 26-08-1996<br>11-10-1996<br>03-03-1998 |
| DE 19534716 A | 20-03-1997 | EP 0764845 A | 26-03-1997 |
| WO 9414053 A | 23-06-1994 | US 5365084 A<br>AU 5801094 A<br>EP 0729572 A<br>JP 8506891 T | 15-11-1994<br>04-07-1994<br>04-09-1996<br>23-07-1996 |
| WO 9801746 A | 15-01-1998 | AU 3352497 A<br>EP 0909384 A | 02-02-1998<br>21-04-1999 |
| EP 0536570 A | 14-04-1993 | JP 5081408 A<br>CA 2078374 A,C<br>DE 69219267 D<br>DE 69219267 T<br>KR 9603873 B<br>US 5377279 A | 02-04-1993<br>20-03-1993<br>28-05-1997<br>21-08-1997<br>23-03-1996<br>27-12-1994 |

EPO FORM P0461

Für nähere Einzelheiten zu diesem Anhang : siehe Amtsblatt des Europäischen Patentamts, Nr.12/82